# EUROPÄISCHE PATENTSCHRIFT

(11) **EP 2 029 986 B1**
(45) Veröffentlichungstag und Bekanntmachung des Hinweises auf die Patenterteilung: **04.05.2011**
(21) Anmeldenummer: 07725495.1
(22) Anmeldetag: 23.05.2007
(51) Int. Cl.: G01K 3/04, G01K 15/00

(54) **VERFAHREN ZUR ÜBERPRÜFUNG EINES ZEIT- UND/ODER TEMPERATURSENSITIVEEN INDIKATORS**
METHOD FOR VERIFYING A TIME-SENSITIVE AND/OR TEMPERATURE-SENSITIVE INDICATOR
PROCÉDÉ DE VÉRIFICATION D'UN INDICATEUR SENSIBLE AU TEMPS ET/OU À LA TEMPÉRATURE

(30) Priorität: 27.07.2006 DE 102006034810
(43) Veröffentlichungstag der Anmeldung: 04.03.2009
(73) Patentinhaber: Bizerba GmbH & Co. KG, 72336 Balingen (DE)
(72) Erfinder: CONZELMANN, Dieter, 72458 Albstadt (DE)
(74) Vertreter: Manitz, Finsterwald & Partner GbR
(86) Internationale Anmeldenummer: PCT/EP2007/004595
(87) Internationale Veröffentlichungsnummer: WO 2008/011932

(56) Entgegenhaltungen:
- WO-A-2005/050192

## Beschreibung

Die Erfindung betrifft ein Verfahren zur Überprüfung eines zeit- und/oder temperatursensitiven Indikators zur Kennzeichnung von verderblichen Produkten. Ein derartiges Verfahren ist aus der WO 2005/050192 A1 bekannt. Ferner betrifft die Erfindung einen Indikator zur Durchführung eines solchen Verfahrens.

Aus dem Stand der Technik sind zeit- und/ oder temperatursensitive Indikatoren bekannt, die beispielsweise auf einem Etikett, einer Produktverpackung oder direkt auf einem Produkt angeordnet werden können und die dazu geeignet sind, anzuzeigen, ob ein dem Indikator zugeordnetes Produkt ein vorbestimmtes Alter überschritten hat und/oder ob ein solches Produkt während des Zeitraums, in dem es mit dem Indikator versehen war, ausreichend kühl gelagert wurde. Es existieren hier Indikatoren, die ausschließlich zeitsensitiv und damit unabhängig von Temperaturen sind, so dass sie ausschließlich das Alter eines Produkts kennzeichnen können. Weiterhin sind zeit- und temperatursensitive Indikatoren bekannt, welche sich sowohl in Abhängigkeit von der jeweils verstrichenen Zeit als auch in Abhängigkeit von der Temperatur, der sie jeweils ausgesetzt sind, verändern.

Ein Indikator der letztgenannten Art ist beispielsweise aus dem deutschen Patent DE 198 03 208 C2 bekannt, welches einen mit einem Produkt koppelbaren Zeit-Temperatur-Indikator betrifft, der zu einem beliebigen Zeitpunkt durch Lichteinstrahlung aktiviert werden kann. Durch Bestrahlung mit Licht einer vorgegebenen Bestrahlungsstärke und einem vorgegebenen Wellenlängenbereich verfährt ein solcher Indikator eine bestimmte Verfärbung, wodurch er praktisch "aufgeladen" wird. Im Anschluss an diese Aktivierung tritt dann - sofern keine neuerliche Aktivierung erfolgt - eine Entfärbung des Indikators ein, deren Maß sowohl abhängig vom Zeitablauf als auch von Temperatureinflüssen ist.

Wenn zu einem Prüfzeitpunkt festgestellt wird, dass das Maß der Entfärbung einen vorgegebenen Wert übersteigt, kann eine Aussage dahingehend getroffen werden, dass das Alter des Produkts zu hoch ist und/oder dass das Produkt nicht ausreichend kühl gelagert wurde, was bedeutet, dass das jeweilige Produkt für eine weitere Verwendung nicht geeignet ist.

Indikatoren der genannten Art sind in Verbindung mit jeglicher Art von verderblichen Produkten sinnvoll einsetzbar, insbesondere sind sie für Lebensmittelprodukte, Arzneimittel, Blutkonserven, etc. geeignet.

Die vorliegende Erfindung ist nicht auf Indikatoren beschränkt, deren Funktionsweise auf einer Verfärbung bzw. Entfärbung basiert, vielmehr ist die Erfindung auf jegliche Art von zeit- und/oder temperatursensitiven Indikatoren anwendbar, beispielsweise auch auf solche Indikatoren, die ein zeit- und/oder temperaturabhängiges elektrisches oder elektromagnetisches Signal abgeben. Im Sinne der vorliegenden Anmeldung ist also mit "Veränderung eines Indikators" immer eine Veränderung beliebiger Art, insbesondere aber eine Verfärbung oder Entfärbung, gemeint. Weiterhin ist es nicht zwingend, dass die in dieser Anmeldung beschriebenen Indikatoren mittels Lichtstrahlen aktivierbar sind. Andere Arten von sinnvollen Aktivierungsformen sind in Abhängigkeit vom jeweils eingesetzten Indikator ebenfalls denkbar.

Beim Einsatz von Indikatoren der beschriebenen Art muss zum einen sichergestellt werden, dass die verwendeten Indikatoren auch tatsächlich funktionieren. Zum anderen ist es wünschenswert, zu beliebigen Zeitpunkten überprüfen zu können, ob ein mit einem Indikator gekennzeichnetes Produkt ein vorgegebenes Alter überschritten oder eine ausreichende Kühlung erfahren hat. Insbesondere soll eine solche Überprüfung bereits vor demjenigen Zeitpunkt möglich sein, zu dem der Indikator anzeigt, dass das Produkt für die weitere Verwendung nicht mehr geeignet ist.

Eine Aufgabe der Erfindung besteht darin, ein Verfahren sowie einen Indikator bereitzustellen, mit dem die Funktionsfähigkeit und/oder die Veränderung des Indikators in effizienter und zuverlässiger Weise überprüft werden kann.

Die Aufgabe wird gelöst durch eine erste Variante eines erfindungsgemäßen Verfahrens zur

Überprüfung eines zeit- und/oder temperatursensitiven Indikators zur Kennzeichnung von verderblichen Produkten, bei dem
- der Zeitpunkt der Aktivierung des Indikators erfasst und gespeichert wird,
- die Zeitdifferenz zwischen dem gespeicherten Aktivierungszeitpunkt und einem Prüfzeitpunkt ermittelt wird, und
- überprüft wird, ob die in der ermittelten Zeitdifferenz aufgetretene Veränderung des Indikators einen von der ermittelten Zeitdifferenz abhängigen Sollwert über- oder unterschreitet.

Da erfindungsgemäß zu einem beliebigen Prüfzeitpunkt also auch immer der zugehörige Aktivierungszeitpunkt des jeweiligen Indikators zur Verfügung steht, wird es möglich, einen Indikator in sehr differenzierter Weise zu prüfen, so dass derartige Überprüfungen beim Einsatz der Erfindung nicht mehr darauf beschränkt sind, lediglich festzustellen, ob ein Produkt für eine weitere Verwendung geeignet ist oder nicht.

Wenn zum Beispiel ein Produkt mit einem Indikator vorliegt, welcher einen Zustand aufweist der unmittelbar nach Aktivierung gegeben ist, musste man bisher davon ausgehen, dass die Aktivierung gerade eben erst stattgefunden hat. Wenn jedoch, so wie dies durch die Erfindung möglich wird, zusätzlich der Aktivierungszeitpunkt des Indikators zur Verfügung steht, kann man z.B. feststellen, wenn die Funktionsfähigkeit des Indikators nicht gegeben ist. Eine solche fehlende Funktionsfähigkeit liegt beispielsweise dann vor, wenn der Indikator immer noch seinen Zustand aufweist, der normalerweise nur unmittelbar nach Aktivierung gegeben ist, obwohl bereits ein signifikanter Zeitraum verstrichen ist. Produkte mit einem nicht funktionsfähigen Indikator können dann erfindungsgemäß aus einem Produktionsprozess ausgeschleust oder nicht zum Verkauf zugelassen werden.

Ein entsprechendes Vorgehen ist möglich, wenn festgestellt wird, dass sich der Zustand des Indikators seit seiner Aktivierung nur in einem zu geringen Maße verändert hat, welches der Zeitdifferenz zwischen Aktivierung und Überprüfung noch nicht entspricht. Es kann erfindungsgemäß also nicht nur festgestellt werden, ob ein Indikator grundsätzlich funktioniert, sondern es ist auch eine zwar gegebene aber nicht ausreichende Funktionsfähigkeit detektierbar.

Weiterhin kann erfindungsgemäß zu beliebigen Prüfzeitpunkten festgestellt werden, ob ein mit einem aktivierten Indikator versehenes Produkt bis zum Prüfzeitpunkt ausreichend kühl gelagert wurde. Wenn eine solche Lagerung nicht gegeben sein sollte, verändert sich der Indikator in der Zeitspanne zwischen Aktivierung und Überprüfung nämlich infolge zu hoher Temperatur stärker als dies in der genannten Zeitspanne zulässig wäre, so dass es erfindungsgemäß während des gesamten Produktionsprozesses möglich wird, ein Produkt auf ausreichende Kühlung zu überprüfen und dieses gegebenenfalls auszuschleusen.

Bevorzugt ist es, wenn zum Zeitpunkt der Überprüfung, beispielsweise in Form einer Referenz-Farbtabelle, Informationen darüber vorliegen, in welcher Weise sich ein Indikator in Abhängigkeit von der seit seiner Aktivierung verstrichenen Zeit verändert. Bei einem nur zeitsensitiven Indikator genügt es, wenn die funktionale Beziehung zwischen der verstrichenen Zeit und der aufgetretenen Veränderung des Indikators bekannt ist. Bei sowohl temperatur- als auch zeitsensitiven Indikatoren hingegen ist es von Vorteil, wenn die zeitabhängige Änderung des Indikators für unterschiedliche, üblicherweise vorkommende Temperaturen bekannt ist.

Wenn Erkenntnisse der genannten Art vorliegen, kann eine erfindungsgemäße Überprüfung realisiert werden, indem festgestellt wird, ob die in der ermittelten Zeitdifferenz zwischen Aktivierungszeitpunkt und Prüfzeitpunkt aufgetretene Veränderung des Indikators derjenigen Veränderung entspricht, die für den jeweiligen Indikator, insbesondere bei einer jeweils vorgegebenen Temperatur, charakteristisch ist. Wenn zum Beispiel beim Produktionsprozess eines Produktes eine Temperatur von 4°C herrschen muss, kann überprüft werden, ob die Veränderung nach Ablauf der ermittelten Zeitdifferenz zwischen Aktivierung und Prüfzeitpunkt derjenigen Veränderung entspricht, die bei einer Temperatur von 4°C üblicherweise auftritt.

Wenn bei einer solchen Überprüfung dann festgestellt wird, dass die ermittelte Veränderung die erwartete Veränderung zumindest um ein vorgegebenes Maß überschreitet, kann eine erste Fehlermeldung erzeugt werden, die eine ungenügende Kühlung und/oder ein zu hohes Alter des mit dem Indikator versehenen Produkts kennzeichnet. In Abhängigkeit von dieser ersten Fehlermeldung können dann geeignete Schritte, beispielsweise ein Ausschleusen des jeweiligen Produktes, eingeleitet werden.

Wenn im Rahmen der Überprüfung jedoch festgestellt wird, dass die ermittelte Veränderung geringer ist als erwartet, kann eine zweite Fehlermeldung abgegeben werden, welche von der ersten unterscheidbar ist und eine fehlende bzw. eine nicht ausreichende Funktionsfähigkeit des Indikators kennzeichnet. Aufgrund der zweiten Fehlermeldung können ebenfalls geeignete Maßnahmen eingeleitet werden. Diese können neben einem Aussteuern des jeweiligen Produkts auch darin bestehen, dass eine entsprechende Meldung an diejenige Produktionsstätte erfolgt, die das Produkt mit dem Indikator versehen hat, da dort vermutlich ein funktionsunfähiger oder nicht ausreichend funktionsfähiger Indikator auf das Produkt aufgebracht wurde. Auf diese Art und Weise können Systemfehler jeweils zu einem möglichst frühen Zeitpunkt erkannt werden.

Es können also unterschiedliche Fehlermeldungen abgegeben werden, je nachdem, ob die festgestellte Veränderung den erwarteten Wert überschreitet oder unterschreitet. Selbstverständlich kann der erwartete Wert bei einer solchen Überprüfung mit geeigneten Toleranzzonen versehen werden, innerhalb derer keine Fehlermeldung erzeugt wird.

Vorteilhaft ist es, wenn dem Indikator ein den Aktivierungszeitpunkt kennzeichnender Code zugeordnet wird, wobei zum Prüfzeitpunkt dann der Code und damit der jeweilige Aktivierungszeitpunkt gelesen werden kann, so dass anschließend die Zeitdifferenz zwischen dem Aktivierungszeitpunkt und dem Prüfzeitpunkt ermittelbar ist. Unter dem Zuordnen eines Codes zu einem Indikator werden im Rahmen der Erfindung all jene Verfahren verstanden, mittels denen eine mechanische Kopplung zwischen Code und Indikator, beispielsweise als Aufdruck auf einem einheitlichen Etikett, einem Produkt oder einer Produktverpackung, verwirklicht werden kann.

Alternativ zu einer Zuordnung bzw. mechanischen Kopplung zwischen einem den Aktivierungszeitpunkt kennzeichnenden Code und einem Indikator ist es erfindungsgemäß auch möglich, dem Indikator lediglich ein das gekennzeichnete Produkt eindeutig identifizierenden Code zuzuordnen, welcher dann gemeinsam mit dem dem jeweiligen Produkt zugeordneten Aktivierungszeitpunkt in einer Datenbank gespeichert wird. Zum Prüfzeitpunkt kann dann der eindeutige, dem Indikator zugeordnete Code gelesen werden, so dass aufgrund dieses Codes in der Datenbank der ihm jeweils zugeordnete Aktivierungszeitpunkt gesucht werden kann. Nach dem Auslesen dieses Aktivierungszeitpunkts aus der Datenbank ist dann wiederum die Zeitdifferenz zwischen dem Aktivierungszeitpunkt und dem Prüfzeitpunkt problemlos ermittelbar.

Zur Durchführung dieser Verfahrensalternative muss allerdings sichergestellt werden, dass die Datenbank zum Zwecke des Beschreibens bei der Aktivierung des Indikators und zum Zwecke des Auslesens beim Prüfen des Indikators zur Verfügung steht. Dies lässt sich beispielsweise erreichen, indem die Datenbank Bestandteil eines internen Netzwerks oder als über Internet abfragbare Datenbank ausgebildet wird.

Bevorzugt ist es, wenn der Code im Wesentlichen gleichzeitig mit dem Indikator auf ein zu kennzeichnendes Produkt aufgebracht, insbesondere aufgedruckt wird. Code und Indikator können hierbei mittels eines gemeinsamen oder mittels zweier separater Druckvorgänge aufgebracht werden. Wenn sich Code und Indikator dann auf einem gemeinsamen Träger, beispielsweise auf einem Etikett oder einer Verpackung befinden, ist sichergestellt, dass Code und Indikator nachträglich nicht mehr voneinander getrennt werden können, wodurch Missbrauchsmöglichkeiten eingeschränkt werden.

Besonders vorteilhaft ist es, wenn der Code zusätzlich einen Identifikationsschlüssel des jeweiligen Herstellers des zu kennzeichnenden Produkts beinhaltet. In einem möglichen Regressfall lässt sich dann neben dem dem Aktivierungszeitpunkt entsprechenden Herstellungsdatum problemlos auch der verantwortliche Hersteller identifizieren. Zusätzlich oder alternativ lässt sich in den Code auch noch zumindest eine der nachfolgend genannten Informationen integrieren:
Indikatortyp, indikatorspezifische Betriebs- und/oder Sensordaten der Applikationsvorrichtung, Produkttyp.

Alternativ oder zusätzlich zu einem Identifikationsschlüssel des jeweiligen Herstellers oder den vorstehen genannten Informationen kann der Code auch einen eindeutigen, das jeweilige Produkt kennzeichnenden Identifikationscode beinhalten. In diesem Fall besitzen alle Produkte, insbesondere auch solche Produkte, die sich in ihrer Art nicht voneinander unterscheiden, verschiedene Identifikationscodes, anhand derer jedes einzelne Produkt über den gesamten Produktionsprozess eindeutig verfolgt und zu beliebigen Zeitpunkten identifiziert werden kann, wodurch zusätzliche Überprüfungen ermöglicht werden.

Der erfindungsgemäß vorgesehene Code kann beliebig ausgebildet werden, bevorzugt ist eine Ausbildung als Miniaturbarcode oder als Datamatrix-Code.

Eine besonders effiziente Ausführung der erfindungsgemäßen Überprüfungen wird durch einen Sensor ermöglicht, welcher sowohl dazu in der

Lage ist, einen Code als auch eine Indikatorveränderung zu detektieren, da in diesem Fall mittels des Sensors jeweils nur einziger Lesevorgang durchgeführt werden muss. Alternativ ist es aber auch möglich, für das Lesen des Codes und der Indikatorveränderung verschiedene Sensoren einzusetzen.

Beim Lesevorgang können Code und Indikator entweder vom Sensor aktiv oder nur von Umgebungslicht beleuchtet werden.

Die Erfindung betrifft gemäß einer zweiten Variante auch ein Verfahren zur Überprüfung eines zeit- und/oder temperatursensitiven Indikators zur Kennzeichnung von verderblichen Produkten, bei dem
- der gespeicherte Zeitpunkt der Aktivierung des Indikators abgerufen oder gelesen wird,
- die Zeitdifferenz zwischen dem gespeicherten Aktivierungszeitpunkt und einem Prüfzeitpunkt ermittelt wird, und
- überprüft wird, ob die in der ermittelten Zeitdifferenz aufgetretene Veränderung des Indikators einen von der ermittelten Zeitdifferenz abhängigen Sollwert über- oder unterschreitet.

Es wird somit auch ein Verfahren unter Schutz gestellt, welches beispielsweise komplett im Bereich eines Kassensystems durchgeführt werden kann und welches lediglich erfordert, dass der bereits gespeicherte oder z.B. auf ein Etikett aufgedruckte Zeitpunkt der Aktivierung auf eine der vorstehenden Arten ermittelt wird. Das Erfassen und Speichern des Zeitpunkts, welches bereits bei Aktivierung des Indikators erfolgt, ist nicht Bestandteil dieser erfindungsgemäßen Verfahrensvariante.

Diese zweite Verfahrensvariante lässt sich gemäß aller vorstehend genannten bevorzugten Ausführungsformen der ersten Variante ausgestalten.

Die Erfindung bezieht sich schließlich auch auf einen Indikator zur Durchführung von Verfahren der vorstehend beschriebenen Art. Ein solcher Indikator ist mit einer mittels Licht aktivierbaren zeit- und/oder temperatursensitiven Markierung und einem einen Aktivierungszeitpunkt kennzeichnenden Code versehen. Wie bereits erwähnt, kann der Code zusätzlich einen Identifikationsschlüssel eines Herstellers und/oder einen das jeweilige Produkt kennzeichnenden Identifikationscode umfassen. Markierung und Code eines erfindungsgemäßen Indikators sind bevorzugt auf eine gemeinsame Trägerschicht aufgebracht.

Weitere bevorzugte Ausführungsformen der Erfindung sind in den Unteransprüchen genannt.

Die Erfindung wird nachfolgend unter Bezugnahme auf ein Ausführungsbeispiel anhand der Figuren erläutert; in diesen zeigen:
- Fig. 1: eine mögliche Ausführungsform eines erfindungsgemä- ßen Indikators in Draufsicht,
- Fig. 2: eine schematische Darstellung eines Sensors zum Lesen eines erfindungsgemäßen Indikators, und
- Fig. 3: eine Matrixdarstellung von bei bestimmten Temperatu- ren erwarteten Verfärbungen eines erfindungsgemäßen Indikators.

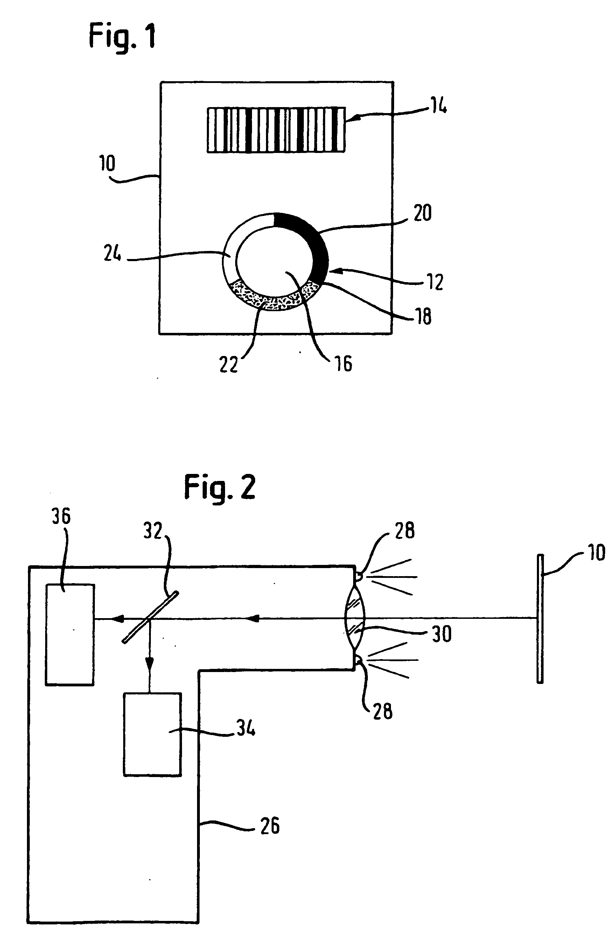

Fig. 1 zeigt ein auf ein Produkt aufbringbares, im Wesentlichen rechteckiges Etikett 10, welches in seinem unteren Bereich mit einem zeit- und temperatursensitiven Indikator 12 und in seinem oberen Bereich mit einem den Aktivierungszeitpunkt des Indikators 12 enthaltenden Barcode 14 versehen, insbesondere bedruckt, ist. Indikator 12 und Barcode 14 sind im dargestellten Ausführungsbeispiel beabstandet voneinander angeordnet. Alternativ hierzu ist es auch möglich, einen Indikator und einen Code in einer einander überlappenden Art und Weise auf einem Etikett anzubringen. Insbesondere können auch Bestandteile des Codes oder der gesamte Code als zeit- und/oder temperatursensitiver Indikator ausgebildet sein.

Der Indikator 12 besteht aus einem zentralen, kreisförmigen Bereich 16, welcher eine zeit- und temperatursensitive Substanz, beispielsweise eine Substanz gemäß DE 198 03 208 C2, aufweist.

Der kreisförmige Bereich 16 ist von einem direkt an ihn angrenzenden ringförmigen Bereich 18 vollständig umgeben, welcher in drei gleich große Segmente 20, 22 und 24 unterteilt ist. Die Segmente 20, 22, 24 weisen dabei voneinander verschiedene Farben auf. Die dunkle Farbe des Segments 20 entspricht derjenigen Farbe, die der kreisförmige Bereich 16 unmittelbar nach seiner Aktivierung besitzt, so dass die Farbe dieses Segments 20 letztlich den Produktzustand "frisch" kennzeichnet. Das Segment 22 besitzt eine etwas hellere Farbe, die der kreisförmige Bereich 16 nach Ablauf einer gewissen Zeitspanne bei einer bestimmten Temperatur aufweist, so dass diese Farbe einen Produktfrischezustand "mittel" kennzeichnet. Das Segment 24 weist schließlich eine vergleichsweise helle Farbe auf, welche der kreisförmige Bereich 16 dann annimmt, wenn bei einer vorgegebenen Temperatur eine so lange Zeitspanne abgelaufen ist, dass das Produkt nicht mehr verwertet werden kann. Die Farbe des Segments 24 kennzeichnet somit einen Produktzustand "nicht mehr frisch".

Da die drei Segmente 20, 22, 24 unmittelbar angrenzend um den kreisförmigen Bereich 16 herum angeordnet sind, können sie letztlich für einen Betrachter als Referenzfarben dienen, anhand derer er durch einen Vergleich der Farbe des kreisförmigen Bereichs 16 mit den Farben der Segmente 20, 22, 24 beurteilen kann, welchen Frischezustand ein mit dem Etikett 10 gekennzeichnetes Produkt besitzt.

Fig. 2 zeigt in schematischer Darstellung einen Sensor 26, welcher zum Lesen eines Etiketts 10 gemäß Fig. 1 geeignet ist. Der Sensor 26 besitzt an seiner Vorderseite Leuchtdioden 28, welche zur Beleuchtung des Etiketts 10 vorgesehen sind. Durch eine solche Beleuchtung wird sichergestellt, dass sowohl die Farbe des kreisförmigen Bereichs 16 als auch der Barcode 14 sicher detektiert werden können. Alternativ kann die Beleuchtung 28 jedoch auch weggelassen werden, wobei in diesem Fall dafür zu sorgen ist, dass beim Einsatz des Sensors 26 ausreichend Umgebungslicht vorhanden ist.

Zwischen den Leuchtdioden 28 befindet sich eine Empfangsoptik 30, welche vom Etikett 10 reflektiertes Licht auf einen Strahlteiler 32 lenkt. Der Strahlteiler 32 bewirkt, dass ein Teil des empfangenen Lichts zu einer ersten Auswerteeinheit 34 und ein weiterer Teil des empfangenen Lichts zu einer weiteren Auswerteeinheit 36 gelenkt werden. Die Auswerteeinheit 34 ist als Farbumschlagssensor ausgebildet, so dass sie dazu geeignet ist, die Farbe des kreisförmigen Bereichs 16 gemäß Fig. 1 zu detektieren. Die Auswerteeinheit 36 hingegen ist als herkömmlicher Barcodeleser ausgebildet, so dass mittels dieser Auswerteeinheit 36 der im Barcode 14 gemäß Fig. 1 enthaltene Aktivierungszeitpunkt gelesen werden kann. Anschließend können die gelesenen Informationen dann auf eine der vorstehend beschriebenen Arten innerhalb des Sensors 26 oder aber auch außerhalb des Sensors 26 in einer externen Recheneinheit ausgewertet werden.

Besondert vorteilhaft ist die Tatsache, dass die erfindungsgemäßen Überprüfungen auch noch beim Verkauf an den Endkunden durchgeführt werden können, indem beispielsweise an einer Kasse ein Sensor gemäß Fig. 2 mit einer geeigneten Auswerte- und Anzeigeeinheit installiert wird.

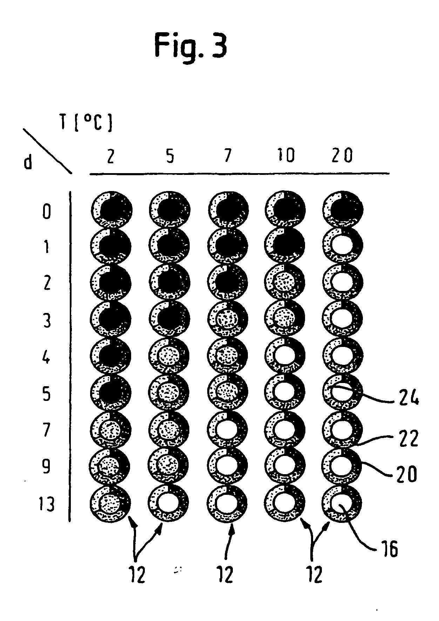

Fig. 3 zeigt eine Matrix, in der Indikatoren 12 gemäß Fig. 1 dargestellt sind, wobei die Farben des kreisförmigen Bereichs 16 dieser Indikatoren 12 in Abhängigkeit von derjenigen Temperatur in °C, der die kreisförmigen Bereiche 16 ausgesetzt sind und des Alters des Indikators 12 in Tagen dargestellt sind.

Fig. 3 veranschaulicht dementsprechend, dass beispielsweise ein Indikator 12, der bis zu fünf Tage einer Temperatur von 2°C ausgesetzt ist, immer noch eine dunkle Farbe aufweist und somit den Produktzustand "frisch" kennzeichnet. Wenn bei einer Temperatur von 2°C jedoch sieben bis dreizehn Tage vergangen sind, besitzt der kreisförmige Bereich 16 eine etwas hellere Farbe, die dann den Produktfrischezustand "mittel" kennzeichnet.

Wenn der gleiche Indikator 12 einer Temperatur von 5°C ausgesetzt wird, signalisiert er nur drei Tage lang den Produktzustand "frisch", bis zum neunten Tag zeigt er den Zustand "mittel", am 13. Tag besitzt der Bereich 16 eine helle Farbe, die den Produktzustand "nicht mehr frisch" kennzeichnet.

In analoger Weise gelten für Temperaturen von 7°C, 10°C und 20°C folgende Zustände:
7°C:
   bis zu 2 Tage frisch, 3 bis 5 Tage mittel, ab dem 7. Tag nicht mehr frisch.
10°C:
   bis zu 1 Tag frisch, am 2. und 3. Tag mittel, ab dem 4. Tag nicht mehr frisch.
20°C:
   unmittelbar bei Aktivierung frisch, ab dem 1. Tag nicht mehr frisch.

Eine Matrix gemäß Fig. 3 kann im Rahmen einer erfindungsgemäßen Überprüfung, insbesondere durch einen Sensor 26 gemäß Fig. 2, beispielsweise in Datenform mit quantifizierten Farbwerten verwendet werden. Wenn in diesem Fall z.B. ein Indikator 12 am vierten Tag nach seiner Aktivierung überprüft wird und das zu überprüfende Produkt eine kontinuierliche Lagertemperatur von 7°C erfordert, kann der im Auswertegerät 26 gespeicherten Matrix gemäß Fig. 3 entnommen werden, dass der kreisförmige Bereich 16 des Indikators 12 bei der Überprüfung den Zustand "mittel" aufweisen muss. Wenn im Rahmen der Überprüfung ein entsprechendes Ergebnis erzielt wird, kann das überprüfte Produkt weiter verarbeitet werden.

Wenn der kreisförmige Bereich 16 jedoch eine dunklere Farbe aufweist, liegt eine nicht gegebene oder nicht ausreichende Funktionsfähigkeit des Indikators vor (vorausgesetzt das Produkt wurde bei 7°C und nicht wesentlich kühler gelagert). Falls der kreisförmige Bereich 16 jedoch eine hellere Farbe aufweist, kann davon ausgegangen werden, dass das überprüfte Produkt während der vergangenen vier Tage zumindest über einen signifikanten Zeitraum bei einer Temperatur von über 7°C gelagert wurde, so dass hier eine Beanstandung bei demjenigen Unternehmen erfolgen kann, welches für die Bearbeitung bis zum vierten Tage zuständig war.

Alternativ zur Verwendung einer Matrix gemäß Fig. 3 in Datenform mit quantifizierten Farbwerten ist auch folgende Vorgehensweise möglich, bei welcher sich ein Auswertegerät praktisch selbst "eicht":
Anstelle eines vorab erfolgenden Speicherns der erwarteten quantifizierten Farbwerte im Auswertegerät können beim Erfassen der Farbe eines Indikators mittels eines Sensors, also erst bei der tatsächlichen Überprüfung des Zustands eines Indikators, zusätzlich die den Indikator auf einem Etikett umgebenden Referenzfarben 20, 22, 24 erfasst werden. Dies erbringt den Vorteil, dass eventuelle Farbverschiebungen, die sich durch einen UV- oder Tageslichtfilter ergeben, eliminiert werden, da sich diese Farbverschiebungen in gleicher Weise beim Indikator und bei den Referenzfarben einstellen, vorausgesetzt das UV- oder Tageslichtfilter deckt neben dem Indikator auch die Referenzfarben ab.
Zudem wird es in den meisten Anwendungsfällen überflüssig, den Indikator beim Erfassen seiner Farbe aktiv zu beleuchten, da es im Rahmen der Auswertung ausschließlich auf relative Farbunterschiede zwischen Indikator und Referenzfarben ankommt. Wenn dann z.B. in Folge einer nicht vorhandenen aktiven Beleuchtung Indikator und Referenzfarben etwas dunkler erscheinen, können diese relativen Farbunterschiede unverändert bestimmt werden.

Im Auswertegerät kann ein direkter Vergleich zwischen Indikatorfarbe und Referenzfarben durchgeführt werden, dessen Ergebnis ohne Hinzuziehung irgendwelcher im Auswertegerät gespeicherter Absolutwerte anzeigt, ob das mit dem Indikator gekennzeichnete Produkt den Zustand "frisch", "mittel" oder "nicht mehr frisch" aufweist.

Ferner kann im Auswertegerät in Form einer Matrix hinterlegt werden, nach wie vielen Tagen bei einer bestimmten Temperatur der Indikator die Referenzfarbe a (hell), b (mittel) oder c (dunkel) aufweisen muss, ohne dass die Farben a, b, c bezüglich ihres Spektrums spezifiziert sind. Eine solche Spezifizierung anhand des Spektrums erfolgt dann erst unmittelbar beim Prüfen des Indikators durch die Ermittlung des Spektrums seiner konkret vorliegenden - gegebenenfalls durch ein UV- oder Tageslichtfilter veränderten - Referenzfarben. Das Spektrum der hellsten ermittelten Referenzfarbe wird dann der hinterlegten Referenzfarbe a zugeordnet, das Spektrum der mittleren ermittelten Referenzfarbe der hinterlegten Referenzfarbe b und das Spektrum der dunkelsten ermittelten Referenzfarbe der hinterlegten Referenzfarbe c. Anschließend kann dann eine Auswertung derart erfolgen, wie vorstehend unter Bezugnahme auf die Matrix gemäß Fig. 3 beschrieben.

### Bezugszeichenliste

- 10: Etikett
- 12: Indikator
- 14: Barcode
- 16: kreisförmiger Bereich
- 18: ringförmiger Bereich
- 20, 22, 24: Segment
- 26: Sensor
- 28: Leuchtdioden
- 30: Empfangsoptik
- 32: Strahlteiler
- 34: Auswerteeinheit
- 36: Auswerteeinheit

## Patentansprüche

1. Verfahren zur Überprüfung eines zeit- und/oder temperatursensitiven Indikators (12) zur Kennzeichnung von verderblichen Produkten,
**dadurch gekennzeichnet , dass**
- mittels eines mit dem Indikator (12) mechanisch gekoppelten Codes ein gespeicherter Zeitpunkt der Aktivierung des Indikators (12) abgerufen oder gelesen wird,
- die Zeitdifferenz zwischen dem gespeicherten Aktivierungszeitpunkt und einem Prüfzeitpunkt ermittelt wird, und
- überprüft wird, ob die in der ermittelten Zeitdifferenz aufgetretene Veränderung des Indikators (12) einen von der ermittelten Zeitdifferenz abhängigen Sollwert über- oder unterschreitet.

2. Verfahren nach Anspruch 1,
**dadurch gekennzeichnet,**
**dass** überprüft wird, ob die in der ermittelten Zeitdifferenz aufgetretene Veränderung des Indikators (12) derjenigen Veränderung entspricht, die für den jeweiligen Indikator (12) insbesondere bei einer vorgegebenen Temperatur charakteristisch ist.

3. Verfahren nach einem der vorhergehenden Ansprüche,
**dadurch gekennzeichnet,**
**dass** eine erste, eine ungenügende Kühlung und/oder ein zu hohes Alter des mit dem Indikator (12) versehenen Produkts kennzeichnende Fehlermeldung erzeugt wird, wenn die erwartete Veränderung des Indikators (12) zumindest um ein vorgegebenes Maß überschritten wird.

4. Verfahren nach einem der vorhergehenden Ansprüche,
**dadurch gekennzeichnet,**
**dass** eine zweite, die Funktionsunfähigkeit des Indikators (12) kennzeichnende Fehlermeldung erzeugt wird, wenn die erwartete Veränderung des Indikators (12) zumindest um ein vorgegebenes Maß unterschritten wird.

5. Verfahren nach einem der vorhergehenden Ansprüche,
**dadurch gekennzeichnet,**
**dass** dem Indikator (12) ein den Aktivierungszeitpunkt kennzeichnender Code zugeordnet wird,
**dass** zum Prüfzeitpunkt der Code (14) und damit der jeweilige Aktivierungszeitpunkt gelesen wird, und
**dass** anschließend die Zeitdifferenz zwischen dem Aktivierungszeitpunkt und dem Prüfzeitpunkt ermittelt wird,
wobei der Code insbesondere noch zumindest eine der nachfolgend genannten Informationen enthält:
Indikatortyp, Herstellerkennung, indikatorspezifische Betriebs- und/ oder Sensordaten der Applikationsvorrichtung, Produkttyp.

6. Verfahren nach einem der Ansprüche 1 bis 4,
**dadurch gekennzeichnet,**
**dass** dem Indikator (12) ein das **gekennzeichnet**e Produkt eindeutig identifizierender Code (14) zugeordnet wird, welcher gemeinsam mit dem dem jeweiligen Produkt zugeordneten Aktivierungszeitpunkt in einer Datenbank gespeichert wird,
**dass** zum Prüfzeitpunkt der eindeutige, dem Indikator (12) zugeordnete Code (14) gelesen und über diesen Code (14) aus der Datenbank der jeweilige Aktivierungszeitpunkt ausgelesen wird, und dass anschließend die Zeitdifferenz zwischen dem Aktivierungszeitpunkt und dem Prüfzeitpunkt ermittelt wird.

7. Verfahren nach einem der Ansprüche 5 oder 6,
**dadurch gekennzeichnet,**
**dass** der Code (14) im Wesentlichen gleichzeitig mit dem Indikator (12) auf ein zu kennzeichnendes Produkt aufgebracht, insbesondere aufgedruckt, wird und/oder Code (14) und Indikator (12) auf eine gemeinsame Trägerschicht aufgebracht werden.

8. Verfahren nach einem der Ansprüche 5 bis 7,
**dadurch gekennzeichnet,**
**dass** der Code (14) einen Identifikationsschlüssel des Herstellers des zu kennzeichnenden Produkts und/oder einen eindeutigen, das jeweilige Produkt kennzeichnenden Identifikationscode beinhaltet.

9. Verfahren nach einem der Ansprüche 5 bis 8,
**dadurch gekennzeichnet,**
**dass** der Code (14) als Miniaturbarcode oder als Datamatrix-Code ausgebildet ist und/oder Code (14) und Indikatorveränderung mit einem einzigen Sensor (26) gelesen werden.

10. Verfahren nach einem der Ansprüche 5 bis 9,
**dadurch gekennzeichnet,**
**dass** Code (14) und Indikator (12) beim Lesevorgang entweder vom Sensor (26) aktiv oder nur von Umgebungslicht beleuchtet werden.

11. Verfahren nach einem der vorhergehenden Ansprüche,
**dadurch gekennzeichnet,**
**dass** der Zeitpunkt der Aktivierung des Indikators (12) erfasst und gespeichert wird.

12. Indikator (12) zur Durchführung eines Verfahrens nach einem der vorhergehenden Ansprüche mit einer insbesondere über Licht aktivierbaren zeit- und/oder temperatursensitiven Markierung (16) und einem den Aktivierungszeitpunkt kennzeichnenden Code (14).

13. Indikator nach Anspruch 12,
**dadurch gekennzeichnet,**
**dass** der Code (14) zusätzlich einen Identifikationsschlüssel des Herstellers des zu kennzeichnenden Produkts und/oder einen eindeutigen, das jeweilige Produkt kennzeichnenden Identifikationscode beinhaltet.

14. Indikator nach einem der Ansprüche 12 oder 13,
**dadurch gekennzeichnet,**
**dass** Markierung (16) und Code (14) auf eine gemeinsame Trägerschicht oder auf ein Produkt oder auf eine Produktverpackung aufgebracht sind.

## Claims

1. A method for the checking of a time-sensitive and/or temperature sensitive indicator (12) for the marking of perishable products, **characterized in that**
- a stored time of the activation of the indicator (12) is retrieved or read by means of a code mechanically coupled to the indicator (12);
- the time difference between the stored activation time and an inspection time is determined; and
- a check is made whether the change of the indicator (12) which occurred in the determined time difference is greater or less than a desired value dependent on the determined time difference.

2. A method in accordance with claim 1,
**characterized in that** a check is made whether the change of the indicator (12) which has occurred in the determined time difference corresponds to that change which is characteristic for the respective indicator (12), in particular at a preset temperature.

3. A method in accordance with one of the preceding claims,
**characterized in that** a first error message characterizing an insufficient cooling and/or too old an age of the product provided with the indicator (12) is generated when the expected change of the indicator (12) is exceeded by at least a preset degree.

4. A method in accordance with any one of the preceding claims,
**characterized in that** a second error message marking the functionality of the indicator (12) is generated when the expected change of the indicator (12) is not reached by at least a preset degree.

5. A method in accordance with any one of the preceding claims, **characterized in that** a code marking the activation time is associated with the indicator (12);
**in that** the code (14), and thus the respective activation time, is read at the inspection time; and
**in that** subsequently the time difference between the activation point and the inspection point is determined,
with the code in particular still containing at least one of the pieces of information named in the following:
type of indicator, manufacturer ID, indicator-specific operational data and/or sensor data of the application device, product type.

6. A method in accordance with any one of the claims 1 to 4, **characterized in that** a code (14) clearly identifying the marked product is associated with the indicator (12) and is stored in a database together with the activation time associated with the respective product;
**in that** the clear code (14) associated with the indicator (12) is read at the inspection time and the respective activation time is read out of the database via this code (14); and
**in that** subsequently the time difference between the activation point and the inspection point is determined.

7. A method in accordance with one of the claims 5 or 6,
**characterized in that** the code (14) is applied, in particular overprinted, onto a product to be marked substantially simultaneously with the indicator (12) and/or the code (14) and the indicator (12) are applied to a common carrier layer.

8. A method in accordance with any one of the claims 5 to 7,
**characterized in that** the code (14) contains an identification key of the manufacturer of the product to be marked and/or the code (14) contains a clear identification code marking the respective product.

9. A method in accordance with any one of the claims 5 to 8,
**characterized in that** the code (14) is made as a miniature barcode or as a data matrix code and/or the code (14) and an indicator change are read with a single sensor (26).

10. A method in accordance with any one of the claims 5 to 9,
**characterized in that** the code (14) and the indicator (12) are illuminated either actively by the sensor (26) or only by ambient light in the reading process.

11. A method in accordance with any one of the preceding claims,
**characterized in that** the point in time of activation of the indicator (12) is detected and saved.

12. An indicator (12) for the carrying out of a method in accordance with any one of the preceding claims having a time-sensitive and/or temperature-sensitive marking (16) which can in particular be activated via light and having a code (14) marking the activation time.

13. An indicator in accordance with claim 12,
**characterized in that** the code (14) additionally contains an identification key of the manufacturer of the product to be marked and/or a clear identification code identifying the respective product.

14. An indicator in accordance with one of the claims 12 or 13,
**characterized in that** the marking (16) and the code (14) are applied to a common carrier layer or to a product or to product packaging.

## Revendications

1. Procédé pour la vérification d'un indicateur (12) sensible au temps et/ou à la température pour caractériser des produits périssables, **caractérisé en ce que**
- au moyen d'un code accouplé mécaniquement à l'indicateur (12), on appelle ou on lit un instant mémorisé de l'activation de l'indicateur (12),
- on détermine la différence de temps entre l'instant d'activation mémorisé et un instant de vérification, et
- on vérifie si la modification de l'indicateur (12) qui s'est produite dans la différence de temps déterminée passe au-dessus ou au-dessous d'une valeur de consigne fonction de la différence de temps.

2. Procédé selon la revendication 1,
**caractérisé en ce que** l'on vérifie si la modification de l'indicateur (12) qui s'est produite dans la différence de temps déterminée correspond à la modification qui est caractéristique pour l'indicateur respectif (12), en particulier à une température prédéterminée.

3. Procédé selon l'une des revendications précédentes,
**caractérisé en ce que** l'on génère un premier avertissement d'erreur, qui caractérise un refroidissement insuffisant et/ou un vieillissement trop important du produit doté de l'indicateur (12) quand la variation attendue de l'indicateur (12) est dépassée d'au moins un degré prédéterminé.

4. Procédé selon l'une des revendications précédentes,
**caractérisé en ce que** l'on génère un second avertissement d'erreur, qui caractérise une incapacité de fonctionnement de l'indicateur (12) quand l'on passe au-dessous de la variation attendue de l'indicateur (12) d'au moins un degré prédéterminé.

5. Procédé selon l'une des revendications précédentes,
**caractérisé en ce que** l'on associe à l'indicateur (12) un code qui caractérise l'instant d'activation,
**en ce qu'**à l'instant de vérification on lit le code (14) et ainsi l'instant d'activation respectif, et
**en ce que** l'on détermine ensuite la différence de temps entre l'instant d'activation et l'instant de vérification,
et dans lequel le code contient en particulier encore l'une au moins des informations citées ci-après :
type d'indicateur, désignation du fabricant, données de service spécifiques à l'indicateur et/ou données du capteur de l'appareil d'application, type de produit.

6. Procédé selon l'une des revendications 1 à 4,
**caractérisé en ce que** l'on associe à l'indicateur (12) un code (14) qui identifie de façon univoque le produit **caractérisé**, ce code étant mémorisé dans une base de données conjointement avec l'instant d'activation associé au produit respectif,
**en ce qu'**à l'instant de vérification on lit le code univoque (14) associé à l'indicateur (12) et au moyen de ce code (14) on lit à partir de la base de données l'instant d'activation respectif, et
**en ce que** l'on détermine ensuite la différence de temps entre l'instant d'activation et l'instant de vérification.

7. Procédé selon l'une des revendications 5 ou 6,
**caractérisé en ce que** le code est appliqué sur un produit à caractériser sensiblement simultanément avec l'indicateur (12), en particulier par impression, et/ou **en ce que** le code (14) et l'indicateur (12) sont appliqués sur une couche porteuse commune.

8. Procédé selon l'une des revendications 5 à 7,
**caractérisé en ce que** le code (14) contient une clé d'identification du fabricant du produit à caractériser et/ou un code d'identification univoque qui caractérise le produit respectif.

9. Procédé selon l'une des revendications 5 à 8,
**caractérisé en ce que** le code (14) est réalisé sous forme de code à barres miniature ou sous forme de code matriciel et/ou **en ce que** le code (14) et la modification de l'indicateur sont lus avec un capteur unique (26).

10. Procédé selon l'une des revendications 5 à 9,
**caractérisé en ce que** le code (14) et l'indicateur (12) sont éclairés lors de l'opération de lecture soit de façon active par le capteur (26) soit uniquement par la lumière environnante.

11. Procédé selon l'une des revendications précédentes,
**caractérisé en ce que** l'instant de l'activation de l'indicateur (12) est saisi et mémorisé.

12. Indicateur (12) pour la mise en oeuvre d'un procédé selon l'une des revendications précédentes, comprenant une marque (16) sensible au temps et/ou à la température, susceptible d'être activée en particulier au moyen de lumière, et un code (14) qui caractérise l'instant d'activation.

13. Indicateur selon la revendication 12,
**caractérisé en ce que** le code (14) contient en supplément une clé d'identification du fabricant du produit à caractériser et/ou un code d'identification univoque qui caractérise le produit respectif.

14. Indicateur selon l'une des revendications 12 ou 13,
**caractérisé en ce que** la marque (16) et le code (14) sont appliqués sur une couche porteuse commune ou sur un produit ou encore sur un emballage du produit.
